# EUROPÄISCHE PATENTSCHRIFT

(11) **EP 1 098 082 B1**
(45) Veröffentlichungstag und Bekanntmachung des Hinweises auf die Patenterteilung: **29.06.2005**
(21) Anmeldenummer: 00123700.7
(22) Anmeldetag: 31.10.2000
(51) Int. Cl.: F02F 3/00, F02F 3/22

(54) **Kolben**
Piston
Piston

(30) Priorität: 06.11.1999 DE 19953384
(43) Veröffentlichungstag der Anmeldung: 09.05.2001
(73) Patentinhaber: Federal-Mogul Wiesbaden GmbH & Co.KG, 65201 Wiesbaden (DE)
(72) Erfinder: Dubois, Frédéric, 65527 Niedernhausen (DE); Poyant, Manuel, 65187 Wiesbaden (DE); Anderson, Barry, Michigan 48393 (US)

(56) Entgegenhaltungen:
- DE-A- 4 210 056
- DE-A- 19 522 756

## Beschreibung

Die Erfindung betrifft einen Kolben gemäß dem Oberbegriff des Patentanspruches 1.

Aus der EP 0 838 587 A1 ist ein Kolben bekannt, der im Bereich des Überhanges der Kolbenringzone eine Aushöhlung aufweist, die sich senkrecht nach oben erstreckt. Diese Ausnehmung ist bezüglich der Außenfläche der Kolbenringzone zurückversetzt angeordnet und soll das Kolbengewicht vermindern. Eine Verbindung zum Kolbeninneren besteht nicht.

Aus der EP 0 167 976 A2 ist ein Kolben mit einer Zylinderrohrkühlung bekannt. Im Kolben ist ein ringförmiger Kühlraum vorgesehen, der auf der Kolbenumfangsfläche zur Zylinderlaufbuchse geöffnet ist. Es handelt sich hierbei im wesentlichen um eine ring- oder schlauchförmige Einkerbung in der Kolbenumfangsfläche, wobei der Kühlraum über den gesamten Umfang des Kolbens zur Zylinderlaufbuchse hin geöffnet ist. Der Kühlraum besteht im weiteren aus zwei Axialabschnitten, wovon die Brennraumseite als Ringnut ausgebildet ist, die von dem inneren Kolbenkörper und einer äußeren Ringwand gebildet wird, die eine Begrenzung zum Zylinderrohr ist und die Kolbenringe trägt. Der Kühlraum erstreckt sich in diesem Axialabschnitt bis hinter die Kolbenringe. Der andere Axialabschnitt ist nahezu auf seiner gesamten Axialhöhe zum Zylinderrohr geöffnet und weist vier Trennwände auf, die radial von der Innenwand des Kühlraums an die Kolbenumfangsfläche und axial von den pleuelseitigen Enden des Kühlraums bis zum axialen Beginn der Ringnut reichen. Diese Ausgestaltung des Kühlraums erfordert eine aufwendige Bearbeitung.

Aus der EP 0 855 499 A1 ist ein flüssigkeitsgekühlter Kolben für Verbrennungsmotoren bekannt, der mindestens einen in einem Kolbenoberteil ausgebildeten, segmentförmigen Kühlmittelkanal aufweist, der an bezüglich der Kolbenbolzenachse symmetrischen Stellen zur Kühlmittelzafuhr und zum Kühlmittelablaß Öffnungen aufweist. Ferner ist ein radial verlaufender, in seinem Verlauf zum Kurbelraum hin geschlossener Verbindungskanal vorgesehen, der mit den ringsegmentförmigen Kanälen im Bereich der Öffnungen verbunden ist.

Die DE 197 47 746 C1 beschreibt einen Kolbenkopf, in dem ein ringförmiger geschlossener Kühlhohlraum ausgebildet ist, der so in Bezug auf die Ringnuten sowie die brennraumseitige Stirnfläche des Kolbens angeordnet ist, daß eine durch den Kühlraum hindurchströmende Kühlflüssigkeit diesen thermisch hoch beanspruchten Bereich des Kolbens kühlen kann. Dem Kühlhohlraum wird die Kühlflüssigkeit über eine Eintrittsöffnung zugeleitet, die durch das äußere Ende eines parallel zur Hauptachse des Kolbens verlaufenden Eintrittskanal gebildet ist. Diese Eintrittsöffnung liegt im überkragenden Bereich des Kolbenkopfes und außerhalb des zurückgesetzten Teils des Kolbenschaftes. Sie öffnet sich im wesentlichen in Richtung parallel zur Mittelachse des Kolbens. Die Kühlflüssigkeit tritt über die Eintrittsöffnung und den Eintrittskanal in den ringförmigen Kühlhohlraum ein, wo dann die Kühlflüssigkeit in beide Richtungen verteilt wird. An einer diametral der Eintrittsöffnung gegenüberliegenden Austrittsöffnung tritt die Kühlflüssigkeit aus dem Kolbenkopf wieder aus. Gemäß einer weiteren Ausführung dieses Kolbens sind kreisbogenförmige Teilkühlkanäle vorgesehen, die sich im Bereich der Bolzennaben oberhalb des zurückgesetzten Schaftbereiches liegenden Teils des Kolbenkopfes erstrecken.

Eine weitere Ausführung sieht zwei Kühltaschen vor, die durch eine Aussparung der unteren Fläche der überkragenden Bereiche des Kolbenkopfes vorhanden sind.

Sämtliche Ausführungsformen im Stand der Technik erfordern eine aufwendige Bearbeitung und gewährleisten keine optimale Kühlung des Kolbenbodens und der Kolbenringe.

Daher ist es Aufgabe der Erfindung einen Kolben derart auszugestalten, daß im Bereich des Kolbenbodens und der Kolbenringe die Kühlung verbessert wird, wobei gleichzeitig auch das Kelbengewicht reduziert werden soll.

Diese Aufgabe wird mit einem Kolben gelöst, der dadurch gekennzeichnet ist, daß die äußeren Kühlausnehmungen eine konische Gestalt aufweisen, wobei die äußeren Kühlausnehmungen bezüglich der Kolbenachse einwärts geneigt angeordnet sind und mit zunehmenden Abstand von der jeweiligen Bolzennabe auf die Brennraummulde zulaufen und daß die äußeren Kühlausnehmungen im Bereich zwischen den Schaftwandabschnitten und den Verbindungswänden in eine nach innen und nach unten offene innere Kühlausnehmung übergehen.

Durch die schräge Anordnung der äußeren Kühlausnehmungen kann das Öl beim Absenken des Kolbens eingefangen und nach oben gedrückt werden, so daß das Öl sehr dicht an den Kolbenboden herangeführt wird. Gleichzeitig wird das Öl in die inneren Kühlausnehmungen gedrückt. Hierzu sind in den Verbindungswänden entsprechende Durchbrüche vorgesehen, die derart angeordnet sind, daß die Stabilität des Kolbens nicht beeinträchtigt wird.

Die schräge Ausrichtung der äußeren Kühlausnehmungen läßt sich auf einfache Weise durch Fräs- oder Stanzprozesse herstellen. Die Werkzeuge werden entsprechend schräg am Kolben angesetzt. Es ist somit nur ein einziger Bearbeitungsschritt notwendig, während beim Stand der Technik bei der Ausbildung entsprechender Kühlausnehmungen mehrere Bearbeitungsschritte erforderlich sind.

Vorzugsweise erstreckt sich die äußere Kühlausnehmung in radialer Richtung mindestens teilweise bis an die Kolbenumfangsfläche des Kolbenschaftes. Es wird dadurch zumindest teilweise eine relativ scharfe Kante am oberen Rand der äußeren Kühlausnehmung gebildet, so daß beim Absenken des Kolbens das Öl noch besser erfaßt wird. Man erhält am oberen Rand der äußeren Kühlausnehmung eine Art Abstreifkante, die das Öl nach innen leitet.

Die äußere Kühlausnehmung erstreckt sich vorzugsweise in Umfangsrichtung mindestens teilweise bis in die Schaftwandabschnitte, die den Verbindungswänden benachbart sind. Dadurch steht eine große Öffnung zur Verfügung, um das Öl beim Absenken des Kolbens aufzufangen. Der Kühleffekt wird dadurch weiter verbessert.

Hierzu trägt auch bei, daß die Innenwand der äußeren Kühlausnehmung vorzugsweise seitlich des jeweiligen Lagerauges zwei nach unten gezogene Abschnitte aufweist.

Vorzugsweise bildet die mittlere Neigungsachse der äußeren Kühlausnehmung mit der Kolbenachse einen Winkel α zwischen 10° und 60°. Hierbei werden kleine Winkel im Bereich von 10° bis 20° bevorzugt. Unter der mittleren Neigungsachse wird die Mittelachse zwischen der Innen- und der Außenwand der äußeren Kühlausnehmung verstanden, die die Gestalt der Kühlausnehmung definieren.

Um die Fertigung der äußeren Kühlausnehmung zu vereinfachen, ist diese vorzugsweise durch parallel angeordnete Innen- und Außenwände begrenzt. Andere Gestaltungen der Innen- und Außenwände sind möglich, wobei eine Neigung der äußeren Kühlausnehmung beizubehalten ist.

Vorteilhafterweise erstreckt sich die äußere Kühlausnehmung nach oben bis hinter die Ringnuten, so daß auch der Ringnutbereich entsprechend gekühlt wird. Besonders vorteilhaft ist es, wenn sich die äußere Kühlausnehmung bis hinter die erste Ringnut oder noch weiter nach oben erstreckt.

Jede innere Kühlausnehmung verbindet vorzugsweise beide äußeren Kühlausnehmungen, so daß ein umlaufender Kühlkanal gebildet wird.

Vorzugsweise sind die inneren Kühlausnehmungen als Ringabschnitte ausgebildet.

Beispielhafte Ausführungsformen der Erfindung werden nachfolgend anhand der Zeichnungen näher erläutert. Es zeigen:
- Figur 1: eine Seitenansicht eines Kolbens,
- Figur 2: einen Vertikalschnitt durch den in Figur 1 gezeigten Kolben,
- Figur 3a: einen Schnitt längs der Linie III-III durch den in Figur 2 gezeigten Kolben,
- Figur 3b,c: Schnitte gemäß weiterer Ausführungsformen, und
- Figur 4: einen Schnitt längs der Linie IV-IV des in Figur 1 gezeigten Kolbens.

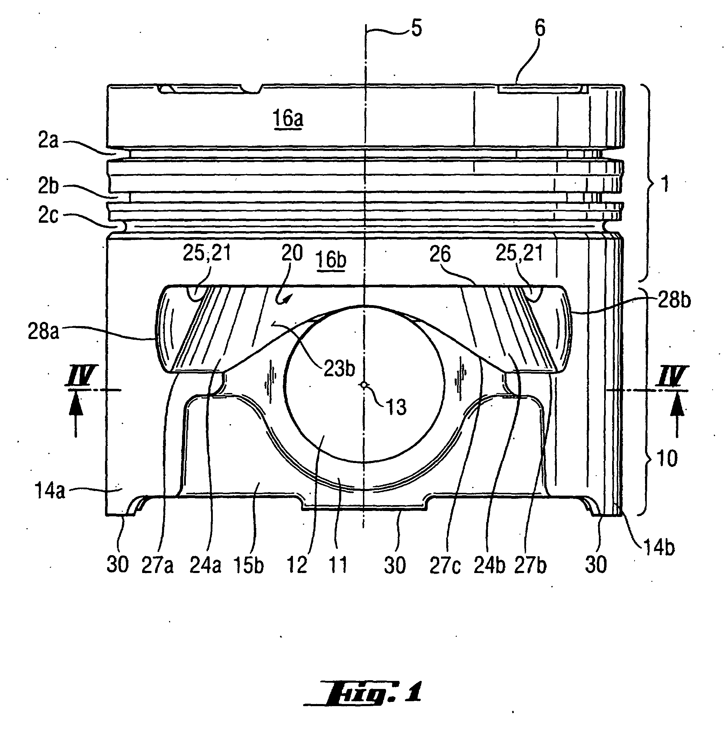

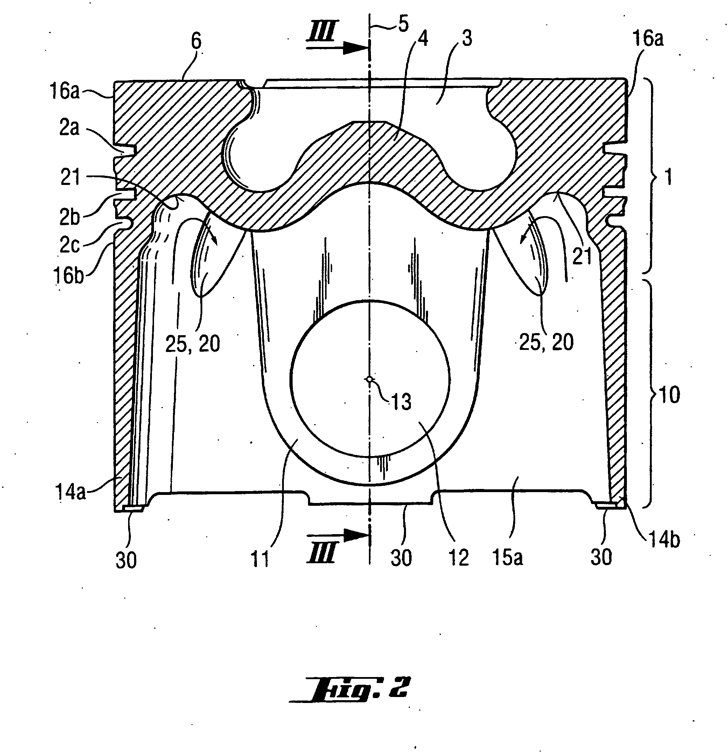

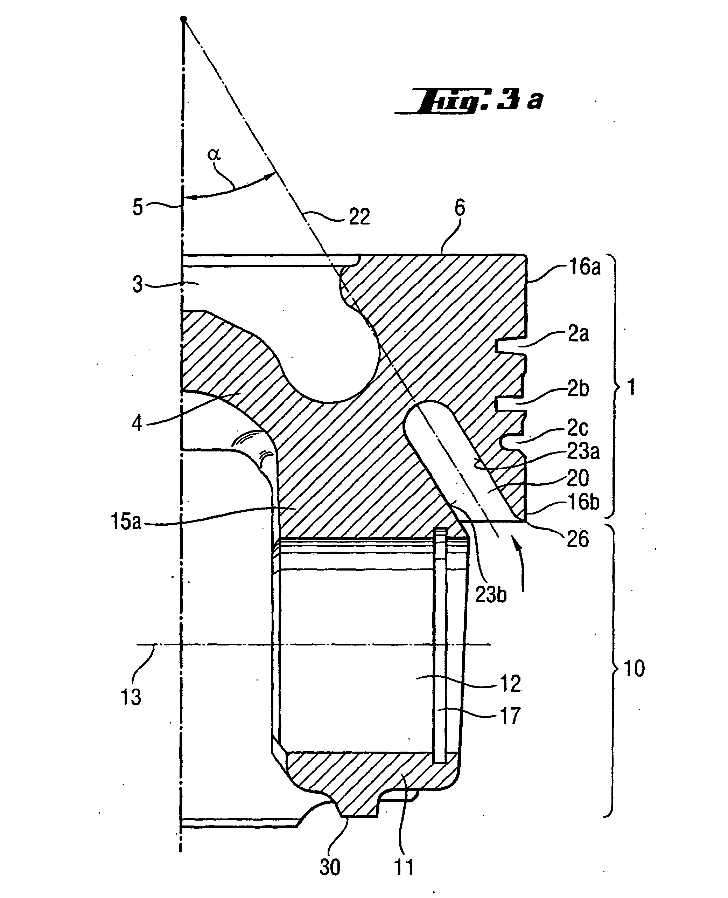

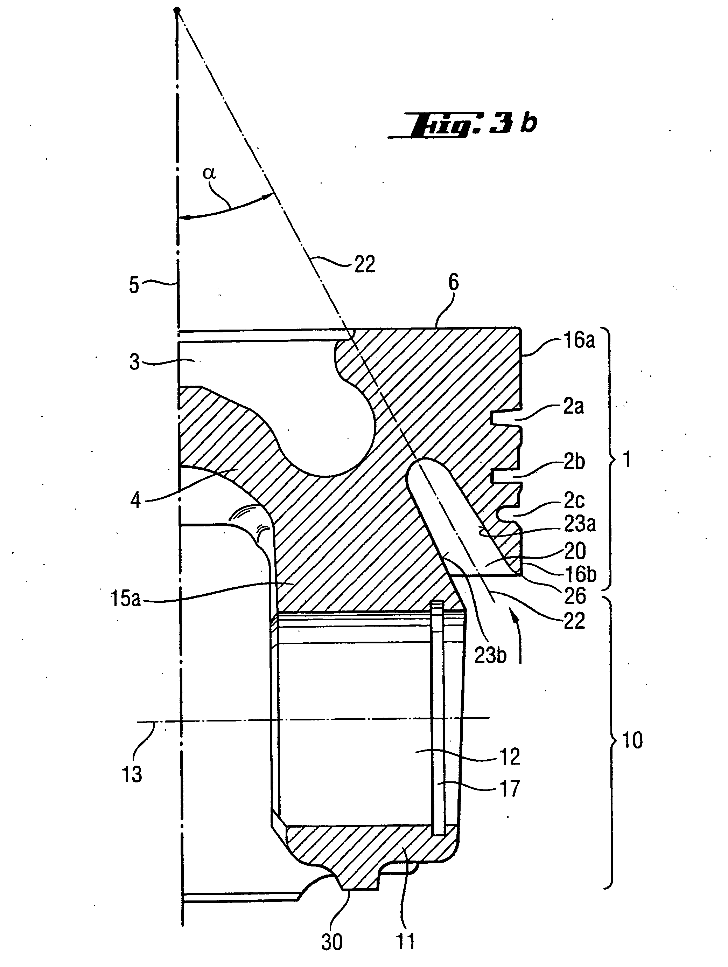

In der Figur 1 ist ein Kolben mit einer Kolbenringzone 1, in der Ringnuten 2a,b und c angeordnet sind, und mit einem Kolbenschaft 10 dargestellt. Oberhalb und unterhalb der Ringnuten 2a,bc weist die Kolbenringzone 1 eine obere 16a und eine untere Kolbenumfangsfläche 16b auf. Die Ringnuten 2b,c dienen zur Aufnahme der Ölabstreifringe bzw. die Ringnut 2a zur Aufnahme des Kompressionsringes. Die Ausgestaltung der Ringnuten entspricht dem Stand der Technik. In der Kolbenoberseite 6 ist eine Brennraummulde 3 angeordnet, die in den Figuren 2 und 3 zu sehen ist.

Der Kolbenschaft 10 besitzt zwei Kolbenschaftabschnitte 14a,b, die über Verbindungswände 15a,b miteinander verbunden sind, wobei diese Verbindungswände in Richtung der Kolbenachse nach innen zurückversetzt sind und die Bolzennaben 11 mit Lageraugen 12 aufweisen. Die Verbindungswände 15a,b sind somit auch gegenüber den Schaftwandabschnitten 14a,b radial zurückversetzt.

Oberhalb des Lagerauges 12 mit der Bolzenachse 13 ist die äußere Kühlausnehmung 20 zu sehen, die sich schräg nach oben und innen erstreckt, wie dies noch anhand der nachfolgenden Figuren erläutert wird. Die äußere Kühlausnehmung wird durch eine Innenwand 23b und eine Außenwand 23a (s. Figur 3a) begrenzt, wovon in der Figur 1 nur die Innenwand 23b zu sehen ist. Wegen der zurückgesetzten Verbindungswände und der Erstreckung der äußeren Kühlausnehmungen in die Schaftwandabschnitte 14a,b ist die Innenwand seitlich neben dem Lagerauge 12 nach unten heruntergezogen, so daß seitliche Abschnitte 24a,b gebildet werden.

Der obere Rand 26 der äußeren Kühlausnehmung 20 verläuft parallel zu den Ringnuten 2a,b und c. Auch die unteren Randabschnitte 27a und b verlaufen parallel zu dem oberen Rand 26 und sind über den mittleren Randabschnitt 27c miteinander verbunden, der kreisbogenförmig um das Lagerauge 12 verläuft. Die beiden seitlichen Ränder 28a,b sind leicht gewölbt ausgebildet und befinden sich im jeweiligen Schaftwandabschnitt 14a,b. Dadurch, daß sich die äußere Kühlausnehmung 20 bis in den Bereich der Schaftwandabschnitte 14a,b erstreckt, entsteht eine große Öffnung zur Aufnahme des aufzufangenden Öls.

Die Verbindungswände 15a,b erstrecken sich genau so weit nach unten wie die Schaftwandabschnitte 14a und b. Sowohl die Schaftwandabschnitte 14a und b als auch die Verbindungswände 15a und b besitzen am unteren Ende Versteifungsrippen 30, die die Stabilität erhöhen.

In der Figur 2 ist ein Vertikalschnitt durch den in der Figur 1 gezeigten Kolben dargestellt. Die Ausgestaltung der Brennraummulde 3, die auch beliebige andere Formgebungen aufweisen kann, und die Formgebung des Kolbenbodens 4 sind deutlich zu sehen. Die Durchbrüche 25, die in der Figur 1 nur andeutungsweise zu sehen sind, und die die Verbindung der äußeren Kühlausnehmungen 20 zum Innenraum des Kolbens herstellen, sind im oberen Bereich der Verbindungswände 14a,b angeordnet, so daß die damit verbundene Schwächung der Wand 15a,b nicht zu einer Schwächung des gesamten Kolbens führt. Die Durchbrüche 25 sind in der Nähe des Bereiches angeordnet, wo die innere Kühlausnehmung 21 angeordnet ist. Es handelt sich hierbei um nach innen und unten offene Kühlausnehmungen, die als Ringabschnitte ausgebildet und an der Unterseite des Kolbenbodens 4 angeordnet sind. Die inneren Kühlausnehmungen 21 erstrecken sich hinter den Ringnuten 2a,b,c nach oben und reichen etwa bis in den Bereich der mittleren Ringnut 2b.

Das Kühlöl, daß durch die Durchbrüche 25 der äußeren Kühlausnehmung 20 nach innen eintritt, wird somit auch in die Nähe der Ringnuten 2b und 2c geleitet. Gleichzeitig wird beim Absenken des Kolbens der in seinem Innenraum befindliche Ölnebel aufgefangen und in den inneren Kühlausnehmungen 21 gesammelt. Es ist auch möglich, daß das Öl durch die Durchbrüche 25 in die äußeren Kühlausnehmungen 20 gespült wird. Dadurch, daß ein ungehinderter Austausch des Kühlöls von den inneren Kühlausnehmungen 21 zu den äußeren Kühlausnehmungen 20 und umgekehrt möglich ist, wird eine optimale Kühlung sichergestellt.

In der Figur 3a ist ein Schnitt längs der Linie III-III des in der Figur 2 gezeigten Kolbens dargestellt. Es ist deutlich zu sehen, daß die Verbindungswand 15a gegenüber der Kolbenringzone 1 nach innen versetzt ist, so daß der Überhang der Kolbenringzone 1 für die Kühlausnehmung 20 zur Verfügung steht. Die Einströmrichtung des Öls ist durch den Pfeil gekennzeichnet, wobei es auch möglich ist, daß das Öl von innen nach außen strömen kann.

Die mittlere Neigungsachse 22 der äußeren Kühlausnehmung 20 bildet mit der Kolbenachse 5 einen Winkel α, der in der hier gezeigten Darstellung bei ca. 40° liegt. Die Ausrichtung und Neigung der äußeren Kühlausnehmung 20 ist so gewählt, daß die äußere Kühlausnehmung auf die Brennraummulde 3 zuläuft. Auch die äußere Kühlausnehmung 20 erstreckt sich bis in den Bereich der mittleren Ringnut 2b. In radialer Richtung erstreckt sich die äußere Kühlausnehmung 20 soweit nach außen, daß sich die obere Kante 26 der äußeren Kühlausnehmung 20 an der unteren Kolbenumfangsfläche 16b befindet. Die Außenwand 23a bildet mit der Kolbenumfangsfläche 16b einen spitzen Winkel, wodurch eine Art Abstreifkante gebildet wird. Im Lagerauge 12 ist im äußeren Randbereich noch eine Ringnut 17 für einen Anschlagring des Bolzens dargestellt.

In der Figur 3b ist eine weitere Ausführungsform der äußeren Kühlausnehmung 20 dargestellt, bei der die Innen- und die Außenwand 23a, 23b nicht parallel zueinander angeordnet sind sondern in Richtung Brennraummulde 3 aufeinander zulaufen. Die mittlere Neigungsachse 22 wird durch die Mittelachse zwischen der Innenwand 23b und der Außenwand 23a der äußeren Kühlausnehmung 20 definiert.

In der Figur 3c ist eine weitere Ausführungsform der äußeren Kühlausnehmung 20 dargestellt. Die Innenwand 23b geht im oberen Bereich in einen oberen Innenwandabschnitt 23b' über, der im wesentlichen vertikal verläuft. Auch die Außenwand 23a geht in einen oberen Außenwandabschnitt 23a' über, der ebenfalls nahezu vertikal angeordnet ist. Bei dieser Ausgestaltung der äußeren Kühlausnehmung 20 wird die mittlere Neigungsachse 22 durch die beiden Innen- und Außenwände 23a, 23b definiert, die wiederum die Gestalt der äußeren Kühlausnehmung 20 definieren.

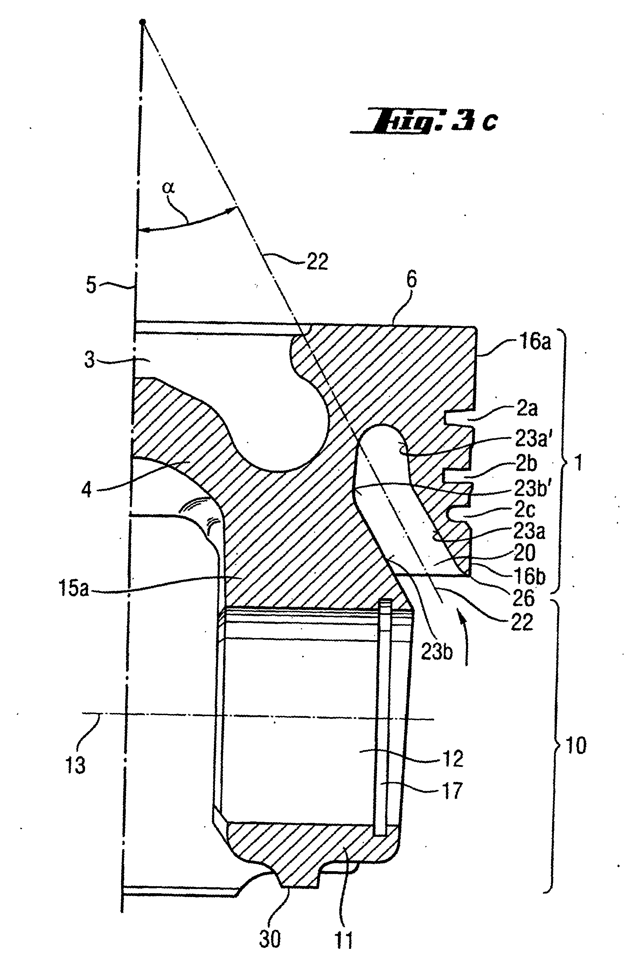

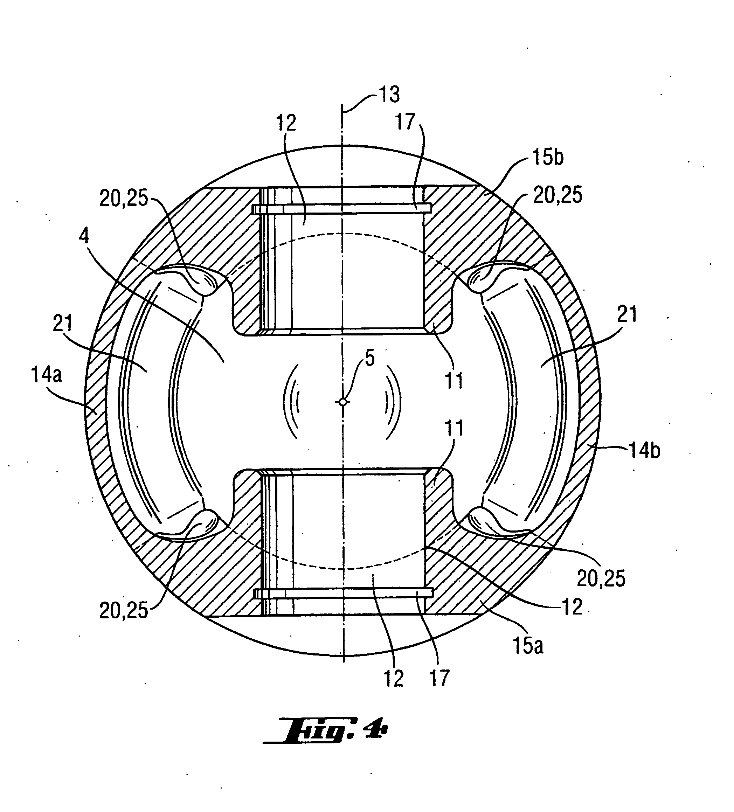

In der Figur 4 ist ein Schnitt längs der Linie IV-IV durch den in Figur 1 gezeigten Kolben dargestellt. Die Stärke der Schaftwandabschnitte 14a,b ist deutlich geringer als die der Verbindungswände 15a,b. Die Wandstärke ist ca. 3 bis 4-fach größer als die der Schaftwandabschnitte, wodurch die Stabilität des gesamten Kolbens deutlich erhöht wird.

### Bezugszeichenliste

- 1: Kolbenringzone
- 2a,b,c: Ringnut
- 3: Brennraummulde
- 4: Kolbenboden
- 5: Kolbenachse
- 6: Kolbenoberseite
- 10: Kolbenschaft
- 11: Bolzennabe
- 12: Lagerauge
- 13: Bolzenachse
- 14a,b: Schaftwandabschnitt
- 15a,b: Verbindungswand
- 16a: oberer Wandabschnitt
- 16b: unterer Wandabschnitt
- 17: Ringnut für Anschlagring
- 20: äußere Kühlausnehmung
- 21: innere Kühlausnehmung
- 22: Neigungsachse
- 23a: Außenwand
- 23a': oberer Außenwandabschnitt
- 23b: Innenwand
- 23b': oberer Innenwandabschnitt
- 24a,b: seitlicher Abschnitt
- 25: Durchbruch
- 26: oberer Rand
- 27a,b,c,: unterer Randabschnitt
- 28a,b: seitlicher Rand
- 30: Verstärkungsrippe

## Patentansprüche

1. Kolben, insbesondere aus Leichtmetall, mit einer Kolbenringzone (1), die am Außenumfang Kolbenringnuten (2a,b,c) und an der Oberseite (6) eine Brennraummulde (3) aufweist, und mit einem Kolbenschaft (10), der zwei Schaftwandabschnitte (14a,b) sowie zwei die Schaftwandabschnitte (14a,b) verbindende Verbindungswände (15a,b) aufweist, die in Richtung Kolbenachse (5) zurückversetzt angeordnet sind, zwei Lageraugen (12) tragende Bolzennaben (11) aufweisen und sich bis zum unteren Rand des Kolbenschafts (10) erstrecken, wobei die Kolbenringzone (1) im Bereich der zurückgesetzten Verbindungswände (15a,b) jeweils eine nach unten offene Kühlausnehmung aufweisen, **dadurch gekennzeichnet,**
**daß** die äußere Kühlausnehmungen (20) eine konische Gestalt aufweisen, wobei die äußere Kühlausnehmungen (20) bezüglich der Kolbenachse (5) einwärts geneigt angeordnet sind und mit zunehmendem Abstand von der jeweiligen Bolzennabe (11) auf die Brennraummulde (3) zulaufen, und
**daß** die äußeren Kühlausnehmungen (20) im Bereich zwischen den Schaftwandabschnitten (14a,b) jeweils in eine nach innen und unten offene innere Kühlausnehmung (21) übergehen.

2. Kolben nach Anspruch 1, **dadurch gekennzeichnet, daß** die äußere Kühlausnehmung (20) sich in radialer Richtung mindestens teilweise bis an die Kolbenumfangsfläche (16b) des Kolbenschaites (10) erstreckt.

3. Kolben nach Anspruch 1 oder 2, **dadurch gekennzeichnet, daß** sich die äußere Kühlausnehmung (20) in Umfangsrichtung mindestens teilweise bis in die Schaftwandabschnitte (14a,b) erstreckt.

4. Kolben nach Ansprüche 1 bis 3, **dadurch gekennzeichnet, daß** die Innenwand (23b) der äußeren Kühlausnehmung (20) seitlich des jeweiligen Lagerauges (12) zwei nach unten gezogene Abschnitte (24a, b) aufweist.

5. Kolben nach einem der Ansprüche 1 bis 4, **dadurch gekennzeichnet, daß** die mittlere Neigungsachse (22) der äußeren Kühlausnehmung (20) mit der Kolbenachse (5) einen Winkel α zwischen 10° und 60° bilden.

6. Kolben nach einem der Ansprüche 1 bis 5, **dadurch gekennzeichnet, daß** die äußere Kühlausnehmung (20) durch parallel angeordnete Innen- und Außenwände (23a, 23b) begrenzt ist.

7. Kolben nach einem der Ansprüche 1 bis 6, **dadurch gekennzeichnet, daß** sich die äußere Kühlausnehmung (20) nach oben bis hinter die Ringnuten (2a-c) erstreckt.

8. Kolben nach einem der Ansprüche 1 bis 7, **dadurch gekennzeichnet, daß** jede innere Kühlausnehmung (21) beide äußeren Kühlausnehmungen (20) verbindet.

9. Kolben nach einem der Ansprüche 1 bis 8, **dadurch gekennzeichnet, daß** die inneren Kühlausnehmungen (21) als Ringabschnitte ausgebildet sind.

## Claims

1. Piston, especially composed of light metal, comprising a piston ring zone (1), having at its outer circumference piston ring grooves (2a, b, c) and on its upper side (6) a combustion chamber depression (3), and comprising a piston body (10), having two body wall sections (14a, b) and two connecting walls (15a, b), which connect the body wall sections (14a, b) together, are disposed set back toward the piston axis (5), have two gudgeon-pin bosses (11) carrying two bearing eyes (12) and extend as far as the lower edge of the piston body (10), wherein the piston ring zone (1) in the region of the set-back connecting walls (15a, b) comprises in each case a cooling recess which is open toward the bottom,
**characterized in that**
the outer cooling recesses (20) are conical in shape, the outer cooling recesses (20) being disposed inclined inwardly relative to the piston axis (5) and extending with increasing distance from the respective gudgeon-pin boss (11) toward the combustion chamber depression (3), and
the outer cooling recesses (20) in the region between the body wall sections (14a, b) each form a transition into an inner cooling recess (21), which is open toward the inside and bottom.

2. Piston according to claim 1, **characterized in that** the outer cooling recess (20) extends in a radial direction at least partially up to the piston circumferential surface (16b) of the piston body (10).

3. Piston according to claim 1 or claim 2, **characterized in that** the outer cooling recess (20) extends in a circumferential direction at least partially up to into the body wall sections (14a, b).

4. Piston according to claims 1 to 3, **characterized in that** the inner wall (23b) of the outer cooling recess (20) at the side of the respective bearing eye (12) comprises two sections (24a, b) which are drawn downwards.

5. Piston according to any one of claims 1 to 4, **characterized in that** the central axis of inclination (22) of the outer cooling recess (20) forms an angle α of between 10° and 60° with the piston axis (5).

6. Piston according to any one of claims 1 to 5, **characterized in that** the outer cooling recess (20) is bounded by parallel disposed inside and outside walls (23a, 23b).

7. Piston according to any one of claims 1 to 6, **characterized in that** the outer cooling recess (20) extends upwardly to behind the ring grooves (2a-c).

8. Piston according to any one of claims 1 to 7, **characterized in that** each inner cooling recess (21) connects the two outer cooling recesses (20).

9. Piston according to any one of claims 1 to 8, **characterized in that** the inner cooling recesses (21) are constituted as sections of an annulus.

## Revendications

1. Piston, notamment en métal léger, avec une zone (1) de segment de piston, qui présente sur la circonférence extérieure des rainures (2a,b,c) de segment de piston et sur le dessus (6) une chambre de combustion (3), et avec un corps de piston (10), qui présente deux parties (14a,b) de paroi de corps ainsi que deux parois de liaison (15a,b) qui relient les parties (14a,b) de paroi de corps, sont disposées en retrait en direction de la ligne médiane (5) du piston, présentent deux bossages d'axe (11) portant des trous d'axe (12) et s'étendent jusqu'au bord inférieur du corps de piston (10), la zone (1) de segment de piston présentant, dans la région des parois de liaison (15a,b) en retrait, un évidement de refroidissement respectif ouvert vers le bas,
**caractérisé en ce que** les évidements de refroidissement extérieurs (20) présentent une forme conique, les évidements de refroidissement extérieurs (20) étant disposés inclinés vers l'intérieur par rapport à la ligne médiane (5) du piston et s'étendant vers la chambre de combustion (3) en s'éloignant du bossage d'axe (11) respectif,
et **en ce que** les évidements de refroidissement extérieurs (20) se raccordent respectivement, dans la région située entre les parties (14a,b) de paroi de corps, à un évidement de refroidissement intérieur (21) ouvert vers l'intérieur et vers le bas.

2. Piston selon la revendication 1, **caractérisé en ce que** l'évidement de refroidissement extérieur (20) s'étend en direction radiale au moins partiellement jusqu'à la surface circonférentielle de piston (16b) du corps de piston (10).

3. Piston selon la revendication 1 ou 2, **caractérisé en ce que** l'évidement de refroidissement extérieur (20) s'étend en direction circonférentielle au moins partiellement jusque dans les parties (14a,b) de paroi de corps.

4. Piston selon l'une des revendications 1 à 3, **caractérisé en ce que** la paroi intérieure (23b) de l'évidement de refroidissement extérieur (20) présente, sur le côté du trou d'axe respectif (12), deux parties (24a,b) s'étendant vers le bas.

5. Piston selon l'une des revendications 1 à 4, **caractérisé en ce que** l'axe central d'inclinaison (22) de l'évidement de refroidissement extérieur (20) forme avec la ligne médiane (5) du piston un angle α compris entre 10° et 60°.

6. Piston selon l'une des revendications 1 à 5, **caractérisé en ce que** l'évidement de refroidissement extérieur (20) est délimité par des parois intérieure et extérieure (23a, 23b) disposées en parallèle.

7. Piston selon l'une des revendications 1 à 6, **caractérisé en ce que** l'évidement de refroidissement extérieur (20) s'étend vers le haut jusque derrière les rainures annulaires (2a-c).

8. Piston selon l'une des revendications 1 à 7, **caractérisé en ce que** chaque évidement de refroidissement intérieur (21) relie les deux évidements de refroidissement extérieurs (20).

9. Piston selon l'une des revendications 1 à 8, **caractérisé en ce que** les évidements de refroidissement intérieurs (21) sont réalisés sous la forme de segments d'anneau.
